# EUROPÄISCHE PATENTANMELDUNG

(11) **EP 3 401 503 A1**
(43) Veröffentlichungstag der Anmeldung: **14.11.2018**
(21) Anmeldenummer: 18170440.4
(22) Anmeldetag: 02.05.2018
(51) Int. Cl.: F01D 5/08, F01D 5/30

(54) **ROTORVORRICHTUNG EINER STRÖMUNGSMASCHINE**

(30) Priorität: 09.05.2017 DE 102017109952
(71) Anmelder: Rolls-Royce Deutschland Ltd & Co KG, 15827 Blankenfelde-Mahlow (DE)
(72) Erfinder: SCHIEßL, Thomas, 15827 Blankenfelde-Mahlow (DE); MOTSCH, Sebastian, 15827 Berlin (DE)

(57) **Zusammenfassung**

Es wird eine Rotorvorrichtung (9A) einer Strömungsmaschine (1) beschrieben, die ein Scheibenrad (17) und eine Vielzahl von umfangsseitig in Aussparungen (20) des Scheibenrads (17) angeordneten und mittels einer Sicherungseinrichtung (22) in axialer Richtung (A) an dem Scheibenrad (17) festgelegten Laufschaufeln (18) aufweist. Jeder Aussparung (20) ist wenigstens ein zumindest im Wesentlichen in axialer Richtung (A) verlaufender Strömungskanal (30, 35) zugeordnet. Die Sicherungseinrichtung (22) weist eine Vielzahl von Ausnehmungen (45, 46) auf, wobei eine Anzahl und Anordnung der Ausnehmungen (45, 46) derart gewählt ist, dass die gesamte durchströmbare Querschnittsfläche der Sicherungseinrichtung (22), die als Summe einer in axialer Richtung (A) betrachteten Überdeckung der Ausnehmungen (45, 46) mit wenigstens einem Strömungskanal (30, 35) definiert ist, im Wesentlichen unabhängig von einer Umfangslage der Sicherungseinrichtung (22) relativ zu dem Scheibenrad (17) ist.

## Beschreibung

Die Erfindung betrifft eine Rotorvorrichtung einer Strömungsmaschine mit einem Scheibenrad und einer Vielzahl von umfangsseitig in Aussparungen des Scheibenrads angeordneten Laufschaufeln, die mittels einer Sicherungseinrichtung in axialer Richtung an dem Scheibenrad festgelegt sind, gemäß der im Oberbegriff des Patentanspruchs 1 näher definierten Art.

Beispielsweise aus der US 6,022,190 A ist eine Rotorvorrichtung einer als Strahltriebwerk ausgeführten Strömungsmaschine bekannt, die mit einem Scheibenrad und damit umfangsseitig verbundenen Laufschaufeln ausgeführt ist. Die Laufschaufeln weisen im Querschnitt tannenbaumförmig oder schwalbenschwanzförmig ausgeführte Schaufelfüße auf, über die die Laufschaufeln in axialer Richtung in dem Scheibenrad verlaufenden Aussparungen bzw. Aufnahmenuten angeordnet sind. Zur axialen Sicherung der Laufschaufeln an dem Scheibenrad ist eine Sicherungseinrichtung bzw. ein Sicherungsring vorgesehen, der einteilig ausgeführt sein kann oder mehrere Sicherungssegmente aufweisen kann. Die Sicherungseinrichtung wird in einem radial inneren Bereich in einer Nut des Scheibenrads und in einem radial äußeren Bereich in einer Nut der Laufschaufeln angeordnet.

Hierbei ist es bekannt, Kühlluft eines sekundären Kühlluftsystems beispielsweise zur Kühlung der Laufschaufeln einzusetzen. Um diese Kühlluft für die Kühlung von Laufschaufeln mehrerer Stufen einsetzen zu können, wird die Kühlluft durch Strömungskanäle im Bereich der Aufnahmenuten für die Laufschaufeln von einer stromaufgewandten Seite der Rotorvorrichtung zu einer stromabgewandten Seite der Rotorvorrichtung geführt. In der insbesondere auf einer stromabgewandten Seite des Scheibenrads angeordneten Sicherungseinrichtung sind üblicherweise Ausnehmungen bzw. Durchtrittsöffnungen für den Kühlluftstrom angeordnet, wobei jeder Laufschaufel eine Ausnehmung zugeordnet ist. Mittels der Querschnittsfläche der Ausnehmungen ist der durch die Strömungskanäle geführte Kühlluftstrom beeinflussbar bzw. einstellbar.

Sämtliche Ausnehmungen definieren im Zusammenspiel mit den Strömungskanälen einen freien Gesamtquerschnitt, der zur Durchströmung mit Kühlluft freigegeben ist, so dass die Ausnehmungen entsprechend den Anforderungen seitens des sekundären Kühlluftsystems als Restriktor eingesetzt werden können. Der freie Strömungsquerschnitt ergibt sich dabei durch eine in axialer Richtung betrachtete Überdeckung der Ausnehmungen mit dem jeweiligen Strömungskanal und ist maximal, wenn die Ausnehmungen nicht von den Laufschaufeln und/oder dem Scheibenrad überdeckt sind. Um eine derartige Überdeckung zu verhindern, werden bei bekannten Rotoren Verdrehsicherungen eingesetzt, die ein Verdrehen der Sicherungseinrichtung in Umfangsrichtung verhindern sollen und sicherstellen sollen, dass ein freier Strömungsquerschnitt sämtlicher Ausnehmungen gleich bleibt und die Ausnehmungen daher zu keinem Zeitpunkt von dem Scheibenrad oder einer Laufschaufel in axialer Richtung überdeckt sind.

Ein maximal zu erzielender freier Strömungsquerschnitt ist dabei durch Toleranzen im Bereich der Verdrehsicherung begrenzt. Um einen gesamten freien Strömungsquerschnitt zu vergrößern ist es bekannt Fertigungstoleranzen zu minimieren und/oder Toleranzen im Bereich der Verdrehsicherung der Sicherungseinrichtung zu reduzieren. Derartige Maßnahmen sind nachteilhafterweise aufwändig und kostenintensiv und führen zu großen Bauteilen mit einem unerwünscht großen Bauteilgewicht.

Es ist weiterhin bekannt, zur Vermeidung einer Verdrehsicherung einen umlaufenden Pufferbereich zwischen Scheibenkopf und Sicherungseinrichtung vorzusehen, der durch eine Anstellung eines dem Scheibenrad zugewandten Bereichs der Scheibeneinrichtung im Bereich der Ausnehmungen gebildet wird. Hierdurch wird eine Vergrößerung eines gesamten Strömungsquerschnitts erzielt.

Nachteilhafterweise weisen eine Sicherungseinrichtung und ein Kopfbereich des Scheibenrads bei einer derartigen Ausführung eine größere Erstreckung in Axialrichtung mit einer damit verbundenen Gewichtserhöhung auf. Zudem ist eine derartige Sicherungseinrichtung massiv auszuführen, um den insbesondere im Betrieb im Bereich des angestellten Bereichs wirkenden mechanischen Lasten standzuhalten.

Der vorliegenden Erfindung liegt daher die Aufgabe zugrunde, eine einfach aufgebaute Rotorvorrichtung zur Verfügung zu stellen, bei der eine gesamte durchströmbare Querschnittsfläche unabhängig von der Umfangslage einer Sicherungseinrichtung ist und somit eine Verdrehsicherung überflüssig macht.

Erfindungsgemäß wird diese Aufgabe mit einer Rotorvorrichtung mit den Merkmalen des Patentanspruches 1 gelöst.

Es wird eine Rotorvorrichtung einer Strömungsmaschine vorgeschlagen, die ein Scheibenrad und eine Vielzahl von umfangsseitig in insbesondere tannenbaumförmigen Aussparungen des Scheibenrads angeordneten und mittels einer Sicherungseinrichtung in axialer Richtung an dem Scheibenrad festgelegten Laufschaufeln aufweist, wobei jeder Aussparung wenigstens ein zumindest im Wesentlichen in axialer Richtung verlaufender Strömungskanal zugeordnet ist, und wobei die Sicherungseinrichtung eine Vielzahl von Ausnehmungen bzw. Aussparungen aufweist.

Erfindungsgemäß ist eine Anzahl und Anordnung der Ausnehmungen derart gewählt, dass die gesamte durchströmbare Querschnittsfläche der Sicherungseinrichtung, die als Summe einer in axialer Richtung betrachteten Überdeckung der Ausnehmungen mit wenigstens einem Strömungskanal definiert ist, im Wesentlichen unabhängig von einer Umfangslage der Sicherungseinrichtung relativ zu dem Scheibenrad ist.

Die erfindungsgemäße Rotorvorrichtung hat dadurch, dass eine Verdrehung der axialen Sicherungseinrichtung um einen beliebigen Winkel relativ zu einer Längsachse im Wesentlichen nicht zu einer Veränderung der gesamten durchströmbaren Querschnittsfläche der Sicherungseinrichtung führt, den Vorteil, dass die gesamte durchströmbare Querschnittsfläche unabhängig von einer im Betrieb auftretenden Verdrehung ist und keine Verdrehsicherung erforderlich ist bzw. eine mit großen Toleranzen ausgeführte Verdrehsicherung vorgesehen sein kann. Die Rotorvorrichtung kann mit einer derartigen axialen Sicherungseinrichtung entsprechend klein, leicht und kostengünstig ausgeführt werden.

Im Unterschied zu bekannten Rotorvorrichtungen ist es bei der erfindungsgemäßen Lösung zur Erzielung eines gewünschten Kühlluftstroms nicht erforderlich, dass sämtliche Ausnehmungen der Sicherungseinrichtung in jedem Betriebszustand komplett in Überdeckung mit einem Strömungskanal sind. Einzelne oder mehrere Ausnehmungen können bei der erfindungsgemäßen Lösung betriebszustandsabhängig wenigstens zeitweise bereichsweise oder auch komplett von einer Laufschaufel und/oder dem Scheibenrad verdeckt sein, so dass die gesamte in jedem Betriebszustand durchströmbare Querschnittsfläche zudem größer als bei bekannten Lösungen wählbar ist.

Die erfindungsgemäße Lösung erlaubt allgemein eine vereinfachte, vereinheitlichte und robuste Scheibenkopfkonstruktion, wobei die Möglichkeit besteht, bei einer großen Anzahl von Anwendungen identisch ausgeführte Scheibenräder bzw. Stege zwischen den Aussparungen zur Schaufelaufnahme, in der Regel so genannte Tannenbaum-Finger, zu verwenden, so dass insbesondere unterschiedliche Stufen der Strömungsmaschine kostengünstig ausführbar sind.

Bei einer vorteilhaften Ausführung einer erfindungsgemäßen Rotorvorrichtung ist wenigstens eine Ausnehmung der Sicherungseinrichtung einem Strömungsbereich zugeordnet, der in radialer Richtung zwischen einem Laufschaufelfuß und einem Nutgrund der Aussparung des Scheibenrads angeordnet ist und einen sogenannten Bucket-Groove-Bereich darstellt.

Alternativ oder zusätzlich hierzu kann wenigstens eine Ausnehmung der Sicherungseinrichtung einem Strömungskanal zugeordnet sein, der in radialer Richtung zwischen einem Kopfbereich von die Aussparungen in Umfangsrichtung bildenden Stegen des Scheibenrads und einem unteren, dem Scheibenrad zugewandten Plattformbereich der Laufschaufeln angeordnet ist.

Eine in sämtlichen Betriebszuständen im Wesentlichen konstante gesamte durchströmbare Querschnittsfläche der Sicherungseinrichtung ist auf einfache Weise erzielbar, wenn die Ausnehmungen der Sicherungseinrichtung einen im Wesentlichen identischen Abstand von einer Mittelachse der Rotorvorrichtung aufweisen, d.h. auf einem Teilkreis bzw. einer Kreislinie um die Mittelachse der Rotorvorrichtung angeordnet sind.

Bei einer vorteilhaften Weiterbildung der Erfindung können weitere Ausnehmungen zumindest im Wesentlichen auf einem weiteren Teilkreis bzw. einer weiteren Kreislinie um die Mittelachse der Rotorvorrichtung und somit mit einem abweichenden Abstand von der Mittelachse der Rotorvorrichtung angeordnet sein. Es können zwei oder mehr Durchmesserbereiche vorgesehen sein, in deren Randbereich jeweils Ausnehmungen angeordnet sind.

Grundsätzlich kann es auch vorgesehen sein, dass die Ausnehmungen stochastisch verteilt in der Sicherungseinrichtung angeordnet sind.

Bei einer vorteilhaften Ausführung einer erfindungsgemäßen Rotorvorrichtung sind alle einen im Wesentlichen identischen Abstand von der Mittelachse aufweisenden Ausnehmungen in Umfangsrichtung gleichverteilt angeordnet.

Bei einer aus bauraumgünstigen Gesichtspunkten sehr vorteilhaften Anordnung der Ausnehmungen bildet wenigstens ein Teil der Ausnehmungen in radialer Richtung einen Randbereich der Sicherungseinrichtung, wobei hierdurch auch eine effektive Randdichtung erzielt werden kann.

Die Ausnehmungen der Sicherungseinrichtung können prinzipiell beliebig gestaltet sein, wobei fertigungstechnisch eine kreisförmige, rechteckige oder schlitzförmige Ausführung zweckmäßig ist. Bei einer schlitzförmigen Ausführung der Ausnehmung, die ein Langloch darstellt, ist es vorteilhaft, wenn diese in Umfangsrichtung verläuft, d. h. dass eine Länge der Ausnehmung in Umfangsrichtung größer als deren Höhe in radialer Richtung ist. Eine schlitzförmige Ausnehmung kann dabei sowohl einen geradlinigen Verlauf als auch einen insbesondere in Umfangsrichtung gebogenen Verlauf aufweisen und vorzugsweise derart ausgeführt sein, dass sie in jeder Umfangslage der Sicherungseinrichtung zumindest einen geringen freien bzw. durchströmbaren Strömungsquerschnitt aufweist.

Um ein Zusammenwirken einer Ausnehmung mit wenigstens zwei in Umfangsrichtung benachbarten Strömungskanälen zu ermöglichen, ist es vorteilhaft, wenn eine schlitzförmig ausgeführte Ausnehmung in Umfangsrichtung eine größere Erstreckung als die Breite des Stegs in diesem radialen Bereich aufweist.

Die Anzahl der Ausnehmungen mit einem im Wesentlichen identischen Abstand von der Mittelachse der Rotorvorrichtung kann insbesondere bei schlitzförmig ausgeführten Ausnehmungen gleich einer Anzahl an Aussparungen des Scheibenrads bzw. der Anzahl an Laufschaufeln sein, sich bei anderen Ausführungen aber auch von der Anzahl der Aussparungen des Scheibenrads und damit der Laufschaufeln unterscheiden. Mathematisch ergibt sich eine besonders vorteilhafte Ausgestaltung, wenn die Anzahl der Ausnehmungen teilerfremd ist.

Die Sicherungseinrichtung kann bei einer erfindungsgemäß ausgeführten Rotorvorrichtung als im Wesentlichen komplett umlaufender Sicherungsring ausgeführt sein. Alternativ hierzu kann die Sicherungseinrichtung eine Vielzahl von Sicherungssegmenten aufweisen, die in Umfangsrichtung verteilt zueinander angeordnet sind, wobei jedes Sicherungssegment in Umfangsrichtung mit einer, zwei, drei oder mehreren Laufschaufeln zusammenwirkt.

Die erfindungsgemäße Rotorvorrichtung kann grundsätzlich sowohl bei Strömungsmaschinen, die als stationäre Gasturbinen ausgeführt sind, wie auch bei Strahltriebwerke bildenden Strömungsmaschinen eingesetzt werden, wobei die Rotorvorrichtung Teil einer beliebigen Stufe einer Turbine oder eines Verdichters sein kann.

Sowohl die in den Patentansprüchen angegebenen Merkmale als auch die in den nachfolgenden Ausführungsbeispielen der erfindungsgemäßen Rotorvorrichtung angegebenen Merkmale sind jeweils für sich alleine oder in beliebiger Kombination miteinander geeignet, den erfindungsgemäßen Gegenstand weiterzubilden.

Weitere Vorteile und vorteilhafte Ausführungsformen einer erfindungsgemäßen Rotorvorrichtung ergeben sich aus den Patentansprüchen und den nachfolgend unter Bezugnahme auf die in der Zeichnung prinzipmäßig beschriebenen Ausführungsbeispielen, wobei zugunsten der Übersichtlichkeit jeweils für bau- und funktionsgleiche Bauteile dieselben Bezugszeichen verwendet werden.

Es zeigt:
- Fig. 1: eine stark schematisierte Längsschnittansicht eines Strahltriebwerkes eines Flugzeugs, welches eine Turbine mit mehreren Rotorvorrichtungen aufweist;
- Fig. 2: einen schematisierten Ausschnitt des Strahltriebwerks der Fig. 1 mit einer Rotorvorrichtung, bei der an einem Scheibenrad umfangsseitig Laufschaufeln angeordnet sind, die jeweils in axialer Richtung mittels einer Sicherungseinrichtung an dem Scheibenrad gesichert sind;
- Fig. 3: eine vereinfachte Draufsicht auf einen Teil der Rotorvorrichtung gemäß Fig. 2 in axialer Richtung, wobei ein zwei Ausnehmungen aufweisendes Sicherungssegment der nur bereichsweise gezeigten Sicherungseinrichtung näher ersichtlich ist;
- Fig. 4: eine der Fig. 3 entsprechende Ansicht der Rotorvorrichtung gemäß Fig. 2, wobei eine zweite Ausführungsform der Ausnehmungen in der Sicherungseinrichtung ersichtlich ist;
- Fig. 5: eine im Wesentlichen der Fig. 3 und Fig. 4 entsprechende Ansicht der Rotorvorrichtung mit nur schematisch angedeuteten Laufschaufeln, wobei eine dritte Ausführungsform der Sicherungseinrichtung ersichtlich ist; und
- Fig. 6 bis 9: der Fig. 5 entsprechende Ansichten der Rotorvorrichtung mit weiteren Ausführungsformen der Sicherungseinrichtung.

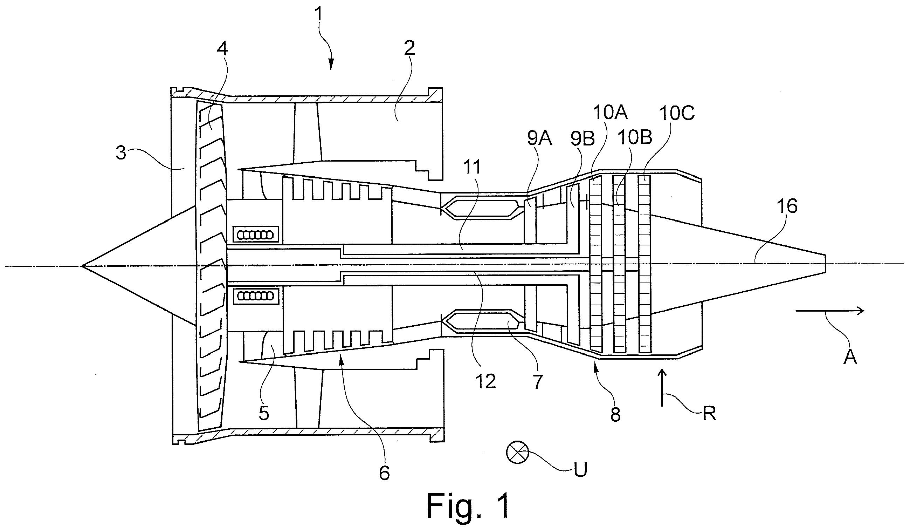

Fig. 1 zeigt eine als Strahltriebwerk 1 ausgeführte Strömungsmaschine in einer Längsschnittansicht, wobei das Strahltriebwerk 1 mit einem Einlaufbereich 3 und einem Nebenstromkanal 2 ausgebildet ist. An den Einlaufbereich 3 stromab schließt sich ein Bläser 4 in an sich bekannter Art und Weise an. Wiederum stromab des Bläsers 4 teilt sich der Fluidstrom im Strahltriebwerk 1 in einen Nebenstrom und einen Kernstrom auf, wobei der Nebenstrom durch den Nebenstromkanal 2 und der Kernstrom in einen Triebwerkskern bzw. Kernstromkanal 5 strömt, der wiederum in an sich üblicher Art und Weise mit einer Verdichtereinrichtung 6, einem Brenner 7 und einer Turbineneinrichtung 8 ausgeführt ist.

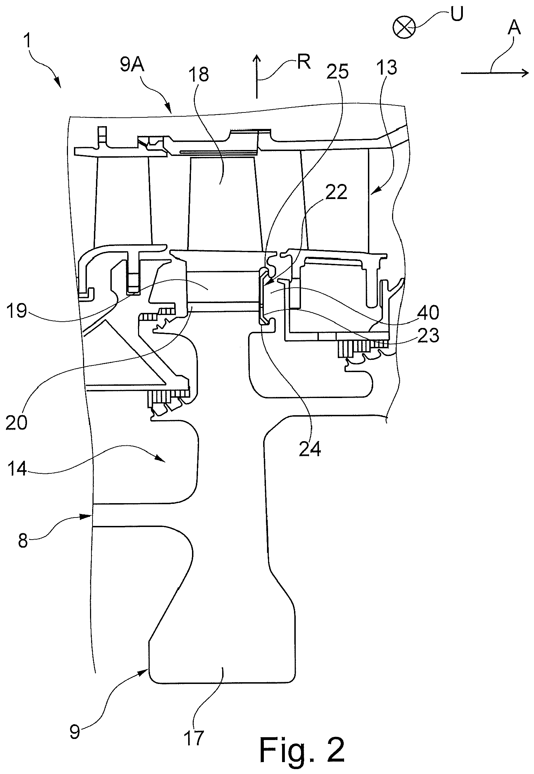

Die Turbineneinrichtung 8 ist vorliegend mehrstufig mit zwei Hochdruck-Rotorvorrichtungen 9A, 9B und drei im Wesentlichen vergleichbar aufgebauten Niederdruck-Rotorvorrichtungen 10A, 10B, 10C ausgeführt, von denen die Rotorvorrichtung 9A in Fig. 2 näher ersichtlich ist. Die Hochdruck-Rotorvorrichtungen 9A, 9B sind hier über eine Hochdruckwelle 11 mit der Verdichtereinrichtung 6 verbunden, wohingegen die Niederdruck-Rotorvorrichtungen 10A, 10B, 10C mittels einer Niederdruckwelle 12 mit dem Bläser 4 verbunden sind.

Die Rotorvorrichtung 9A und eine in axialer Richtung A des Strahltriebwerks 1 stromauf der Rotorvorrichtung 9A angeordnete Statorvorrichtung 13 bilden hier eine erste Stufe 14 der Turbineneinrichtung 8.

Die Rotorvorrichtung 9A ist mit einem zentrisch angeordneten Scheibenrad 17 ausgeführt, das mit der Hochdruckwelle 11 verbunden ist und um eine Zentralachse bzw. Mittelachse 16 drehbar gelagert ist. An dem Scheibenrad 17 sind in radial äußeren Bereichen umfangsseitig eine Vielzahl von Laufschaufeln 18 angeordnet. Die Laufschaufeln 18 weisen hierzu jeweils einen mit einem sogenannten Tannenbaumprofil ausgebildeten Schaufelfuß 19 auf, über den sie in an sich bekannter Weise jeweils in im Wesentlichen in axialer Richtung in dem Scheibenrad 17 verlaufenden Aussparungen 20 des Scheibenrads 17 angeordnet sind. Zwischen zwei in Umfangsrichtung U benachbarten Aussparungen 20 des Scheibenrads 17 ist dabei jeweils ein fingerartiger Steg 21 am Scheibenkopf des Scheibenrads 17 ausgebildet, welcher ein zum Zusammenwirken mit den Schaufelfüßen 19 korrelierendes Wellenprofil an seinen Flanken aufweist.

Alternativ hierzu kann es auch vorgesehen sein, dass mehrere in Umfangsrichtung U des Strahltriebwerks 1 benachbart zueinander angeordnete Laufschaufeln 18 über einen gemeinsamen Schaufelfuß 19 in einer Aussparung 20 des Scheibenrads 17 angeordnet sind.

Zur axialen Sicherung der Laufschaufeln 18 gegenüber dem Scheibenrad 17 ist vorliegend an einem stromabwärtigen Ende der Rotorvorrichtung 9A eine Sicherungseinrichtung 22 vorgesehen. Die Strömungsrichtung bezieht sich dabei auf das Arbeitsgas in dem Kernstromkanal 5, welches im Wesentlichen in axialer Richtung A des Strahltriebwerks 1 strömt. Die Sicherungseinrichtung 22 weist mehrere in Umfangsrichtung U miteinander zusammenwirkende und im Wesentlichen baugleich ausgeführte Sicherungssegmente 23 auf, wobei ein Sicherungssegment 23 in Umfangsrichtung U vorliegend gleichzeitig mit vier Aussparungen 20 des Scheibenrads 17 und den darin angeordneten Schaufelfüßen 19 der Laufschaufeln 18 zusammenwirkt.

Eine Erstreckung der Sicherungssegmente 23 in Umfangsrichtung U kann bei alternativen Ausführungen der Erfindung auch größer oder kleiner sein, so dass ein Sicherungssegment 23 gleichzeitig mit weniger oder mehr Aussparungen 20 zusammenwirken kann.

Die Sicherungseinrichtung 22 ist vorliegend mit einem bezüglich einer radialen Richtung R des Strahltriebwerks 1 inneren Rand in einer umlaufenden Nut 24 des Scheibenrads 17 und mit dem äußeren Rand in einer umlaufenden und von sämtlichen Laufschaufeln 18 gebildeten Nut 25 an dem Scheibenrad 17 axial gehalten.

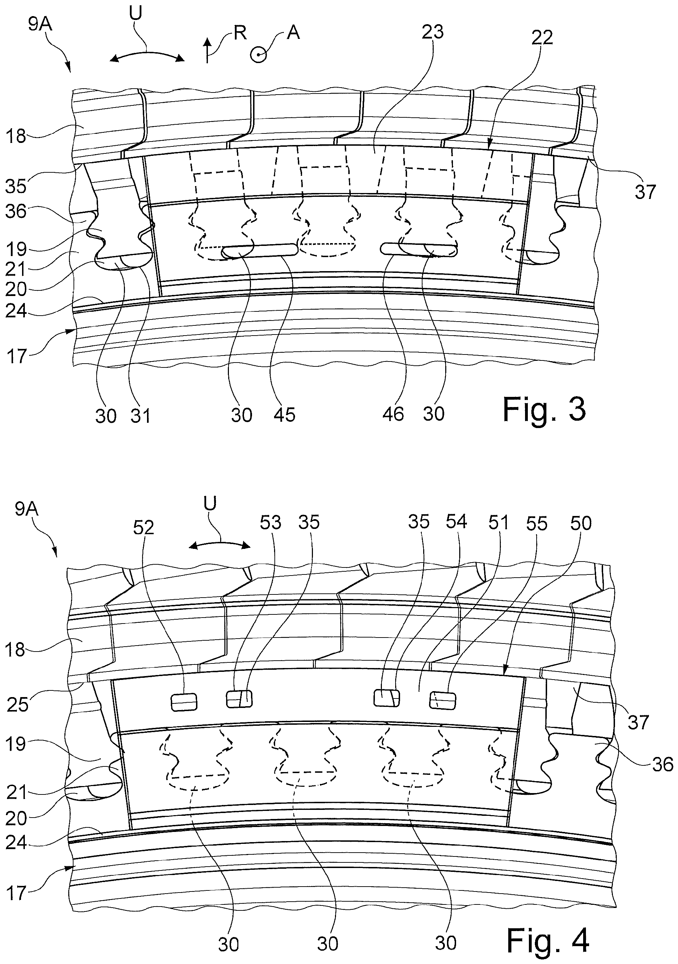

Wie in Fig. 3 näher ersichtlich ist, wird von den Aussparungen 20 des Scheibenrads 17 zusammen mit jeweils einem Schaufelfuß 19 einer Laufschaufel 18 ein Strömungskanal 30 gebildet, der sich in radialer Richtung R von einem Nutgrund 31, auch Bucket Groove Bereich genannt, des Scheibenrads 17 bis zu einem angrenzenden Ende des jeweiligen Schaufelfußes 19 erstreckt und in Umfangsrichtung U von den zwei benachbarten fingerartigen Stegen 21 des Scheibenrads 17 begrenzt ist.

Zudem sind weitere Strömungskanäle 35 vorgesehen, die sich in radialer Richtung R von einem Kopfbereich 36 der Stege 21 des Scheibenrads 17 bis zu einem in radialer Richtung R unteren Plattformbereich 37 der Laufschaufeln 18 erstrecken und die in Umfangsrichtung U von zwei in Umfangsrichtung U benachbarten Schaufelfüßen 19 begrenzt sind. Die Strömungskanäle 35 sind dabei in einem sogenannten Shank-Bereich angeordnet.

Durch die Strömungskanäle 30, 35 wird im Betrieb des Strahltriebwerks 1 Kühlluft eines sogenannten sekundären Kühlluftsystems von einer stromaufgewandten Seite der Rotorvorrichtung 9A zu einer stromabgewandten Seite der Rotorvorrichtung 9A geführt, wobei die Kühlluft beispielsweise auch zur Kühlung der Laufschaufeln 18 verwendet wird.

Um einen Austritt der durch die Strömungskanäle 30 geführten Kühlluft in einen stromabseitig des Scheibenrads 17 bzw. der Laufschaufeln 18 angeordneten Raum 40 zu ermöglichen, weisen die Sicherungssegmente 23 der Sicherungseinrichtung 22, die im Bereich der Strömungskanäle 30 im Wesentlichen plan an einer stromabwärtigen Seite des Scheibenrads 17 und der Laufschaufeln 18 anliegen und von denen lediglich eines gezeigt ist, vorliegend jeweils zwei Ausnehmungen 45, 46 auf.

Die Ausnehmungen 45, 46 sind hier jeweils schlitzartig als Langloch ausgeführt und erstrecken sich im Wesentlichen in Umfangsrichtung U, wobei ein Abstand der Ausnehmungen 45, 46 von der Zentralachse 16 im Wesentlichen identisch ist. Die Ausnehmungen 45, 46 sind dabei vorzugsweise in Umfangsrichtung U derart gebogen ausgeführt, dass eine Mittellinie der Ausnehmungen 45, 46 eine Kreislinie um die Zentralachse 16 darstellt. Die Gesamtzahl der Ausnehmungen 45, 46 sämtlicher Sicherungssegmente 23 der Sicherungseinrichtung 22 ist dabei ungleich der Anzahl der Aussparungen 20 des Scheibenrads 17.

Jede Ausnehmung 45, 46 weist in Abhängigkeit einer Umfangslage der Sicherungseinrichtung 22 gegebenenfalls eine freie Strömungsquerschnittsfläche auf, die durch eine in axialer Richtung A betrachtete Überdeckung der Ausnehmung 45, 46 mit dem jeweiligen Strömungskanal 30 definiert ist. Somit ergibt sich für sämtliche Ausnehmungen 45, 46 eine gesamte durchströmbare Querschnittsfläche der Sicherungseinrichtung 22.

Die Ausnehmungen 45, 46 auf einer Kreislinie um die Zentralachse 16 weisen in Umfangsrichtung U vorzugsweise eine Erstreckung bzw. Breite auf, die größer als ein Abstand von benachbarten Aussparungen 20 des Scheibenrads 17 ist. Hierdurch ist eine freie Strömungsquerschnittsfläche jeder Ausnehmung 45, 46 in jedem Betriebszustand kleiner als eine Gesamtquerschnittsfläche der jeweiligen Ausnehmung 45, 46.

Bei Ausgestaltungen mit einer gleichen Aufteilung zwischen Schaufelfüßen 19 und Ausnehmungen der Sicherungseinrichtung 22 kommen X Schaufelfüße 19 auf X bzw. X*N Ausnehmungen der Sicherungseinrichtung 22.

Wenn eine ungleiche Aufteilung zwischen Schaufelfüßen 19 und den Luft durchlassenden Ausnehmungen der Sicherungseinrichtung 22 vorliegt, können nachfolgende Beziehungen vorliegen:
- bei X Schaufelfüßen z. B. (X+1) Ausnehmungen der Sicherungseinrichtung bzw.
- bei X Schaufelfüßen z. B. (X+1)*N Ausnehmungen der Sicherungseinrichtung oder
- bei X Schaufelfüßen z. B. (X-1) Ausnehmungen der Sicherungseinrichtung bzw.
- bei X Schaufelfüßen z. B. (X-1)*N Ausnehmungen der Sicherungseinrichtung oder
- bei X Schaufelfüßen z. B. (X+2) Ausnehmungen der Sicherungseinrichtung bzw.
- bei X Schaufelfüßen z. B. (X+2)*N Ausnehmungen der Sicherungseinrichtung oder
- bei X Schaufelfüßen z. B. (X-2) Ausnehmungen der Sicherungseinrichtung bzw.
- bei X Schaufelfüßen z. B. (X-2)*N Ausnehmungen der Sicherungseinrichtung usw.
- bei X Schaufelfüßen z. B. (X+M) Ausnehmungen der Sicherungseinrichtung bzw.
- bei X Schaufelfüßen z. B. (X+M)*N Ausnehmungen der Sicherungseinrichtung oder
- bei X Schaufelfüßen z. B. (X-M) Ausnehmungen der Sicherungseinrichtung bzw.
- bei X Schaufelfüßen z. B. (X-M)*N Ausnehmungen der Sicherungseinrichtung sodass unabhängig von der Winkellage zwischen Schaufelfuß 19 und der Sicherungseinrichtung 22 der totale Strömungsgesamtquerschnitt integriert über den gesamten Umfang konstant und somit völlig unabhängig von Sicherungen gegen Verschiebung in Umfangsrichtung ist.

Eine einfache Ausgestaltung besteht demzufolge darin, bei gleichmäßiger Verteilung über den Umfang X Schaufelfüße und X+1 bzw. X-1 Ausnehmungen z. B. Sicherungsplatten der Sicherungseinrichtung 22 vorzusehen. Um eine Umfangsabhängigkeit des lokalen Kühlluftmassenstromes zu minimieren wird eine bevorzuget Anwendung darin bestehen, bei gleichmäßiger Verteilung über den Umfang X Schaufelfüße 19 und eine relativ große Anzahl von Luft durchlassenden Ausnehmungen in Sicherungsplatten (X+M)*N bzw. (X-M)*N vorzusehen.

Mithin ist es vorteilhaft, die Gesamtanzahl X der Ausnehmungen 45, 46 um eins größer oder um eins kleiner als die Gesamtanzahl der Schaufelfüße 19 zu wählen.

Die gesamte durchströmbare Querschnittsfläche der Sicherungseinrichtung 22 ist im Wesentlichen unabhängig von einer Umfangslage der Sicherungseinrichtung 22, d.h. dass sich die gesamte durchströmbare Querschnittsfläche der Sicherungseinrichtung 22 auch bei einer Verdrehung der Sicherungseinrichtung 22 relativ zu dem Scheibenrad 17 bzw. zu den Laufschaufeln 18 nicht verändert, da bei einer relativen Verdrehung der Sicherungseinrichtung 22 eine Reduzierung der freien Strömungsquerschnittsfläche einzelner Ausnehmungen 45, 46 im Wesentlichen durch eine Erhöhung der freien Strömungsquerschnittsfläche anderer Ausnehmungen 45, 46 ausgeglichen wird.

In Fig. 4 bis Fig. 9 sind weitere Ausführungsformen von Sicherungseinrichtungen 50, 70, 90, 100, 110, 120 gezeigt, die sich hinsichtlich der Anordnung, Anzahl und Form von Ausnehmungen gegenüber der Sicherungseinrichtung 22 unterscheiden. Im Folgenden wird lediglich auf die Unterschiede der Sicherungseinrichtungen 50, 70, 90, 100, 110, 120 zu der Sicherungseinrichtung 22 eingegangen und ansonsten auf die obige Beschreibung verwiesen.

Bei der in Fig. 4 gezeigten Sicherungseinrichtung 50 weist jedes Sicherungssegment 51 vier jeweils im Wesentlichen rechteckig bzw. quadratisch ausgeführte Ausnehmungen 52, 53, 54, 55 auf, wobei in Umfangsrichtung U betrachtet der Abstand zwischen der ersten Ausnehmung 52 und der zweiten Ausnehmung 53 sowie zwischen der dritten Ausnehmung 54 und der vierten Ausnehmung 55 um ein Vielfaches kleiner als der Abstand zwischen der zweiten Ausnehmung 53 und der dritten Ausnehmung 54 ist. Sämtliche Ausnehmungen 52, 53, 54, 55 sind auf einem Teilkreis um die Zentralachse 16 angeordnet, wobei der Radius dieser Kreislinie hier so gewählt ist, dass die Ausnehmungen 52, 53, 54, 55 im Unterschied zu den Ausnehmungen 45, 46 der Fig. 3 mit den Strömungskanälen 35 im Kopfbereich 36 der Stege 21 des Scheibenrads 17 zusammenwirken. Die Anzahl und Größe der Ausnehmungen 52, 53, 54, 55 ist auch hier so gewählt, dass die gesamte freie Querschnittsfläche der Sicherungseinrichtung 50 im Wesentlichen unabhängig von einer Verdrehung der Sicherungseinrichtung 50 relativ zu dem Scheibenrad 17 bzw. den Laufschaufeln 18 ist.

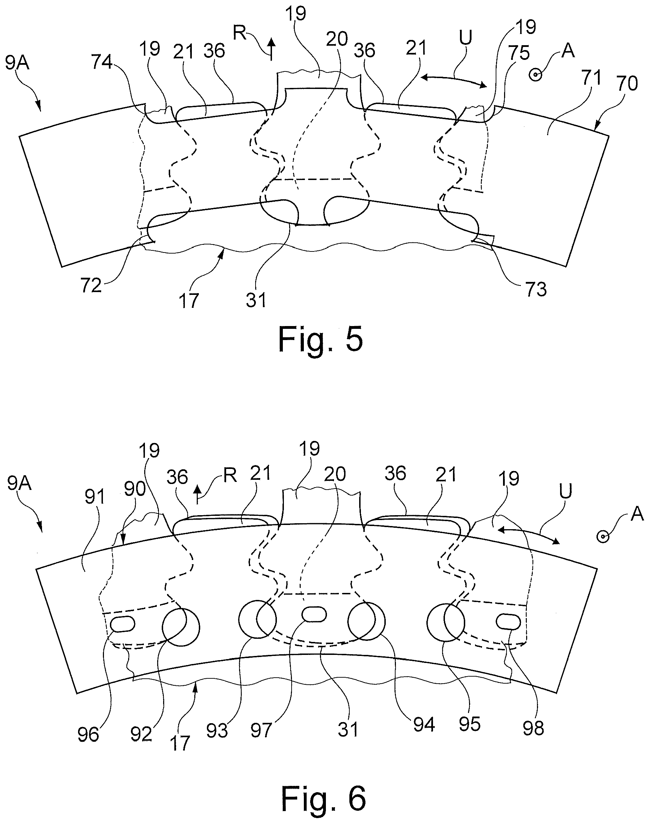

Bei einem in Fig. 5 ersichtlichen Sicherungssegment 71 einer Sicherungseinrichtung 70 sind wiederum vier Ausnehmungen 72, 73, 74, 75 vorgesehen, wobei zwei Ausnehmungen 72, 73 auf einem Teilkreis mit einem derartigen Abstand zu der Zentralachse 16 liegen, dass sie mit den Strömungskanälen 30 am Nutgrund 31 der Aussparungen 20 zusammenwirken, und die anderen beiden Ausnehmungen 74, 75 auf einem Teilkreis mit einem größeren Abstand zu der Zentralachse 16 liegen, so dass sie mit den Strömungskanälen 35 im Kopfbereich 36 der Stege 21 zusammenwirken. Während bei den vorherigen Ausführungen die Ausnehmungen jeweils Öffnungen mit geschlossenem Rand waren, sind die Ausnehmungen 72, 73, 74, 75 hier jeweils offen zu einem in radialer Richtung R betrachteten inneren Randbereich bzw. äußeren Randbereich des Sicherungssegments 71 hin gestaltet und bilden mithin selbst die jeweiligen Ränder des Sicherungssegments 71 in dem betreffenden Umfangsbereich der Ausnehmungen 72, 73, 74, 75.

In Fig. 6 ist ein Sicherungssegment 91 einer Sicherungseinrichtung 90 gezeigt, wobei das Sicherungssegment 91 sowohl kreisförmige Ausnehmungen 92, 93, 94, 95 als auch schlitzförmige Ausnehmungen 96, 97, 98 aufweist, wobei sämtliche Ausnehmungen 92 bis 98 einen im Wesentlichen vergleichbaren Abstand zu der Zentralachse 16 aufweisen und zum Zusammenwirken mit den Strömungskanälen 30 im Nutgrund 31 vorgesehen sind. Je nach Umfangslage der Sicherungseinrichtung 90 sind jeweils zwei kreisförmige Ausnehmungen 92, 93 bzw. 94, 95 teilweise in Überdeckung mit einem Steg 21 des Scheibenrads 17, oder eine kreisförmige Ausnehmung hiervon ist vollständig in Überdeckung mit dem Steg 21 während die jeweils andere kreisförmige Ausnehmung vollständig gegenüber dem Strömungskanal 30 geöffnet ist. Die jeweils freie Strömungsquerschnittsfläche bleibt mithin im Wesentlichen gleich.

Vorliegend ist in Umfangsrichtung U betrachtet ein Abstand zwischen zwei schlitzförmigen Ausnehmungen 96, 97, 98 im Wesentlichen gleich, wobei in diesem Abstand jeweils zwei kreisförmige Ausnehmungen 92, 93 bzw. 94, 95 angeordnet sind.

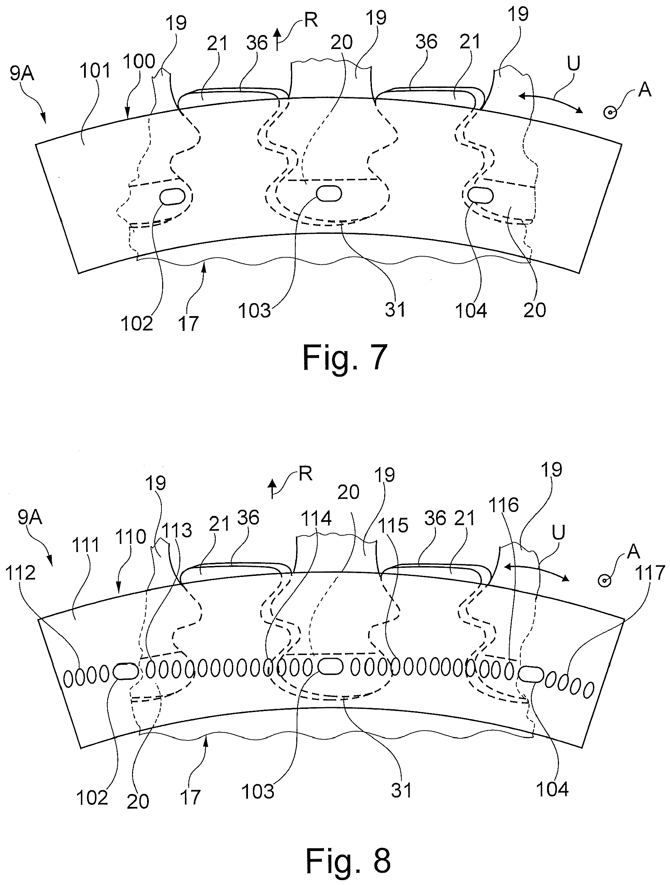

Ein Sicherungssegment 101 einer in Fig. 7 näher ersichtlichen Sicherungseinrichtung 100 weist vorliegend drei schlitzartige Ausnehmungen 102, 103, 104 auf, bei denen eine Erstreckung in Umfangsrichtung U vorliegend etwa doppelt so groß wie eine Erstreckung in radialer Richtung R ist. Die Ausnehmungen 102, 103, 104 weisen alle einen im Wesentlichen identischen Abstand zu der Zentralachse 16 auf, wobei eine Gesamtanzahl der Ausnehmungen 102, 103, 104 der Sicherungseinrichtung 100 vorliegend um den Wert 1 größer als eine Gesamtanzahl der Aussparungen 20 des Scheibenrads 17 ist.

Das in Fig. 8 gezeigte Sicherungssegment 111 einer Sicherungseinrichtung 110 weist neben den auf einem Teilkreis liegenden schlitzartigen Ausnehmungen 102, 103, 104 weitere Ausnehmungen 112, 113, 114, 115, 116, 117 usw. kleineren Durchmessers auf, die vergleichbar zu den schlitzartigen Ausnehmungen 102, 103, 104 ausgeführt sind und eine weitere Ausgestaltungsmöglichkeit zeigen. Die zusätzlichen Ausnehmungen 112, 113, 114, 115, 116, 117 usw. bilden zusammen mit den Ausnehmungen 102, 103, 104 eine Art Sieb, so dass die gesamte durchströmte Querschnittsfläche bei einer Verdrehung der Sicherungseinrichtung annähernd gleich bleibt.

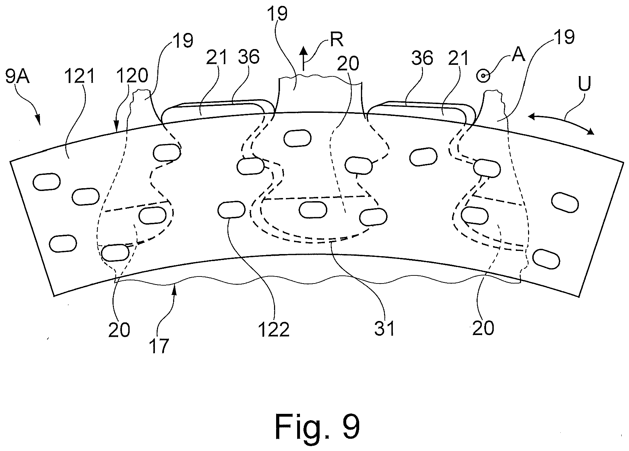

Bei der in Fig. 9 gezeigten Ausführung einer Sicherungseinrichtung 120 weist ein Sicherungselement 121 eine Vielzahl von Ausnehmungen 122 auf, die vorliegend stochastisch in Umfangsrichtung U und in radialer Richtung R des Sicherungssegments 121 verteilt angeordnet sind, wobei eine Auslegung und Anordnung der Ausnehmungen 122 vorzugsweise mit numerischen automatisierten Methoden durchgeführt wird.

### Bezugszeichenliste

- 1: Strömungsmaschine; Strahltriebwerk
- 2: Nebenstromkanal
- 3: Einlaufbereich
- 4: Bläser
- 5: Kernstromkanal
- 6: Verdichtereinrichtung
- 7: Brenner
- 8: Turbineneinrichtung
- 9A, 9B: Rotorvorrichtung (Hochdruck)
- 10A, 10B, 10C: Rotorvorrichtung (Niederdruck)
- 11: Hochdruckwelle
- 12: Niederdruckwelle
- 13: Statorvorrichtung
- 14: erste Stufe der Turbineneinrichtung
- 16: Zentralachse
- 17: Scheibenrad
- 18: Laufschaufel
- 19: Schaufelfuß
- 20: Aussparungen des Scheibenrads
- 21: Steg des Scheibenrads
- 22: Sicherungseinrichtung
- 23: Sicherungssegment
- 24: Nut des Scheibenrads
- 25: Nut der Laufschaufel
- 30: Strömungskanal
- 31: Nutgrund der Aussparungen des Scheibenrads
- 35: weiterer Strömungskanal
- 36: Kopfbereich Steg
- 37: Plattformbereich der Laufschaufeln
- 40: Raum
- 45, 46: Ausnehmungen der Sicherungseinrichtung
- 50: Sicherungseinrichtung
- 51: Sicherungssegment
- 52 bis 55: Ausnehmungen der Sicherungseinrichtung
- 70: Sicherungseinrichtung
- 71: Sicherungssegment
- 72 bis 75: Ausnehmungen der Sicherungseinrichtung
- 90: Sicherungseinrichtung
- 91: Sicherungssegment
- 92 bis 98: Ausnehmungen der Sicherungseinrichtung
- 100: Sicherungseinrichtung
- 101: Sicherungssegment
- 102, 103, 104: Ausnehmungen der Sicherungseinrichtung
- 110: Sicherungseinrichtung
- 111: Sicherungssegment
- 112 bis 117: Ausnehmungen der Sicherungseinrichtung
- 120: Sicherungseinrichtung
- 121: Sicherungssegment
- 122: Ausnehmungen der Sicherungseinrichtung
- A: axiale Richtung des Strahltriebwerks
- R: radiale Richtung des Strahltriebwerks
- U: Umfangsrichtung des Strahltriebwerks

## Patentansprüche

1. Rotorvorrichtung (9A, 9B, 10A, 10B, 10C) einer Strömungsmaschine (1), die ein Scheibenrad (17) und eine Vielzahl von Laufschaufeln (18) aufweist, die umfangsseitig in Aussparungen (20) des Scheibenrads (17) angeordnet und mittels einer Sicherungseinrichtung (22; 50; 70; 90; 100; 110; 120) in axialer Richtung (A) an dem Scheibenrad (17) festgelegt sind, wobei jeder Aussparung (20) wenigstens ein zumindest im Wesentlichen in axialer Richtung (A) verlaufender Strömungskanal (30, 35) zugeordnet ist, und wobei die Sicherungseinrichtung (22; 50; 70; 90; 100; 110; 120) eine Vielzahl von Ausnehmungen (45, 46; 52 bis 55; 72 bis 75; 92 bis 98; 102 bis 104; 112 bis 117; 122) aufweist, **dadurch gekennzeichnet, dass** eine Anzahl und Anordnung der Ausnehmungen (45, 46; 52 bis 55; 72 bis 75; 92 bis 98; 102 bis 104; 112 bis 117; 122) derart gewählt ist, dass die gesamte durchströmbare Querschnittsfläche der Sicherungseinrichtung (22; 50; 70; 90; 100; 110; 120), die als Summe einer Überdeckung der Ausnehmungen (45, 46; 52 bis 55; 72 bis 75; 92 bis 98; 102 bis 104; 112 bis 117; 122) mit wenigstens einem Strömungskanal (30, 35) definiert ist, im Wesentlichen unabhängig von einer Umfangslage der Sicherungseinrichtung (22; 50; 70; 90; 100; 110; 120) relativ zu dem Scheibenrad (17) ist.

2. Rotorvorrichtung nach Anspruch 1, **dadurch gekennzeichnet, dass** wenigstens eine Ausnehmung (45, 46; 52 bis 55; 72 bis 75; 92 bis 98; 102 bis 104; 112 bis 117; 122) der Sicherungseinrichtung (22; 50; 70; 90; 100; 110; 120) einem Strömungskanal (30) zugeordnet ist, der in radialer Richtung (R) zwischen einem Laufschaufelfuß (32) und einem Nutgrund (31) der Aussparung (20) des Scheibenrads (17) angeordnet ist.

3. Rotorvorrichtung nach einem der Ansprüche 1 oder 2, **dadurch gekennzeichnet, dass** wenigstens eine Ausnehmung (45, 46; 52 bis 55; 72 bis 75; 92 bis 98; 102 bis 104; 112 bis 117; 122) der Sicherungseinrichtung (22; 50; 70; 90; 100; 110; 120) einem Strömungskanal (35) zugeordnet ist, der in radialer Richtung (R) zwischen einem Kopfbereich (36) von die Aussparungen (20) in Umfangsrichtung (U) bildenden Stegen (21) des Scheibenrads (17) und einem unteren Plattformbereich (37) der Laufschaufeln (18) angeordnet ist.

4. Rotorvorrichtung nach einem der Ansprüche 1 bis 3, **dadurch gekennzeichnet, dass** die Ausnehmungen (45, 46; 52 bis 55; 62, 63; 72 bis 75; 92 bis 98; 102 bis 104; 112 bis 117; 122) der Sicherungseinrichtung (22; 50; 70; 90; 100; 110; 120) zumindest im Wesentlichen auf einem Teilkreis um eine Mittelachse (16) der Rotorvorrichtung (9A, 9B, 10A, 10B, 10C) angeordnet sind.

5. Rotorvorrichtung nach Anspruch 4, **dadurch gekennzeichnet, dass** weitere Ausnehmungen (45, 46; 52 bis 55; 72 bis 75; 92 bis 98; 102 bis 104; 112 bis 117; 122) vorgesehen sind, die auf einem weiteren Teilkreis um eine Mittelachse (16) der Rotorvorrichtung (9A, 9B, 10A, 10B, 10C) angeordnet sind.

6. Rotorvorrichtung nach einem der Ansprüche 1 bis 5, **dadurch gekennzeichnet, dass** alle einen im Wesentlichen identischen Abstand von der Mittelachse (16) aufweisenden Ausnehmungen (45, 46; 52 bis 55; 72 bis 75; 92 bis 98; 102 bis 104; 112 bis 117; 122) in Umfangsrichtung (U) gleichverteilt angeordnet sind.

7. Rotorvorrichtung nach einem der Ansprüche 1 bis 6, **dadurch gekennzeichnet, dass** wenigstens ein Teil der Ausnehmungen (45, 46; 52 bis 55; 72 bis 75; 92 bis 98; 102 bis 104; 112 bis 117; 122) in radialer Richtung (R) zumindest abschnittsweise einen Randbereich der Sicherungseinrichtung (22; 50; 70; 90; 100; 110; 120) bildet.

8. Rotorvorrichtung nach einem der Ansprüche 1 bis 7, **dadurch gekennzeichnet, dass** wenigstens eine Ausnehmung (45, 46; 52 bis 55; 72 bis 75; 92 bis 98; 102 bis 104; 112 bis 117; 122) der Sicherungseinrichtung (22; 50; 70; 90; 100; 110; 120) schlitzförmig ausgeführt ist, wobei die Ausnehmung (45, 46; 52 bis 55; 72 bis 75; 92 bis 98; 102 bis 104; 112 bis 117; 122) in Umfangsrichtung (U) eine größere Erstreckung als die Breite des Stegs (20) aufweist.

9. Rotorvorrichtung nach einem der Ansprüche 1 bis 8, **dadurch gekennzeichnet, dass** eine Anzahl der Ausnehmungen (45, 46; 52 bis 55; 72 bis 75; 92 bis 98; 102 bis 104; 112 bis 117; 122) auf einem Teilkreis um die Mittelachse (16) gleich einer Anzahl der Aussparungen (20) ist.

10. Rotorvorrichtung nach einem der Ansprüche 1 bis 9, **dadurch gekennzeichnet, dass** eine Anzahl der Ausnehmungen (45, 46; 52 bis 55; 72 bis 75; 92 bis 98; 102 bis 104; 112 bis 117; 122) auf einem Teilkreis um die Mittelachse (16) der Rotorvorrichtung (9A, 9B, 10A, 10B, 10C) sich von einer Anzahl der Aussparungen (20) unterscheidet.

11. Rotorvorrichtung nach einem der Ansprüche 1 bis 10, **dadurch gekennzeichnet, dass** eine Anzahl der Ausnehmungen (45, 46; 52 bis 55; 72 bis 75; 92 bis 98; 102 bis 104; 112 bis 117; 122) teilerfremd zur Anzahl der Aussparungen (20) ist.

12. Rotorvorrichtung nach einem der Ansprüche 1 bis 11, **dadurch gekennzeichnet, dass** die Sicherungseinrichtung (22; 50; 70; 90; 100; 110; 120) als im Wesentlichen komplett umlaufender Sicherungsring ausgeführt ist.

13. Rotorvorrichtung nach einem der Ansprüche 1 bis 11, **dadurch gekennzeichnet, dass** die Sicherungseinrichtung (22; 50; 70; 90; 100; 110; 120) eine Vielzahl von Sicherungssegmenten (23; 51; 71; 91; 101; 111; 121) aufweist, die in Umfangsrichtung (U) verteilt zueinander angeordnet sind.
